# EUROPÄISCHE PATENTANMELDUNG

(11) **EP 0 718 422 A1**
(43) Veröffentlichungstag der Anmeldung: **26.06.1996**
(21) Anmeldenummer: 95119182.4
(22) Anmeldetag: 06.12.1995
(51) Int. Cl.: D01G 27/00, H02P 5/50

(54) **Maschine zum Herstellen von Wattewickeln aus Faserbändern**

(30) Priorität: 22.12.1994 CH 3888/94
(71) Anmelder: MASCHINENFABRIK RIETER AG, CH-8406 Winterthur (CH)
(72) Erfinder: Siegenthaler, Peter, CH-8424 Enbrach (CH); Ulmer, Georg, CH-8309 Nürensdorf (CH); Rengel, Marcel, CH-8406 Winterthur (CH); Huber, Roland, CH-8546 Islikon (CH); Graber, Werner, CH-8810 Horgen (CH)

(57) **Zusammenfassung**

Die Maschine enthält ein Wickelaggregat (14, 15, 16, 17, 19), das mit einem Antriebselektromotor (22) gekuppelt ist, und Streckwerke (3, 4) zum Verziehen der Faserbänder (F). Jedem der Streckwerke (3, 4) ist je ein eigener Antriebselektromotor (7, 8) zugeordnet. Einrichtungen sind vorgesehen zum Messen der Drehzahl des Wickelaggregat-Antriebsmotors (22) und zum Synchronisieren der Streckwerks-Antriebsmotoren (7, 8) mit der gemessenen Drehzahl. Dadurch sind keine aufwendigen mechanischen Uebertragungselemente zwischen dem Wickelaggregat-Antriebsmotor (22) und den Streckwerken (3, 4) erforderlich, insbesondere keine lagen Wellen, die sich beim Anlauf und bein Anhalten verdrehen könnten. Ein stets gleichbleibendes Verhältnis zwischen der Drehzahl des Wickelaggregat-Antriebsmotors und den Drehzahlen der Walzen in den Streckwerken (3, 4) kann gewährleistet werden.

## Beschreibung

Die Erfindung bezieht sich auf eine Maschine zum Herstellen von Wattewickeln aus Faserbändern, mit einem Wickelaggregat, das mit einem Antriebselektromotor gekuppelt ist, und mit Streckwerken zum Verziehen der Faserbänder.

Solche Maschinen, auch Wattenmaschinen genannt, sind bekannt. Sie dienen zum Herstellen von Wattewickeln, die dann einer Kämmaschine vorgelegt werden, in welcher die Watten gekämmt werden. In diesen Wattenmaschinen werden Faserbänder, z.B. Streckenbänder, die aus Kannen abgezogen werden, in den Streckwerken verzogen und dann nebeneinandergelegt über einen Walzenkalander dem in der Regel auf Wickelwalzen getragenen Wattewickel zugeführt.

Die Kalanderwalzen und die den Wattewickel drehenden Elemente, z.B. Wickelwalzen, die zusammen das Wickelaggregat bilden, werden von dem Antriebselektromotor angetrieben.

In bekannten Wattenmaschinen treibt der gleiche Antriebselektromotor auch die Streckwerke - in der Regel zwei - sowie gegebenenfalls Abzugselemente, welche die Faserbänder aus den Kannen abziehen. Dazu werden lange Uebertragungswellen und zahlreiche Getriebeelemente verwendet. Diese bedingen nicht nur einen beträchtlichen mechanischen Aufwand, sondern wegen der Länge der Wellen besteht auch die Gefahr, dass beim Anlauf und beim Abstellen der Maschine - wegen Verdrehung der Wellen - die Antriebsdrehzahlen der Streckwerke nicht genau mit der Drehzahl des Antriebselektromotors synchronisiert sind, das heisst, nicht genau im richtigen, vorbestimmten Verhältnis zur Drehzahl der Kalanderwalzen und zur Umfangsgeschwindigkeit des Wattewickels stehen.

Die Aufgabe der Erfindung besteht darin, die eingangs angegebene Maschine derart auszubilden, dass die geschilderten Nachteile vermieden werden. Es soll also bei reduziertem mechanischem Aufwand die genaue Synchronisierung der Streckwerke mit dem Wickelaggregat gewährleistet werden können.

Die erfindungsgemässe Maschine, mit der diese Aufgabe gelöst wird, ist dadurch gekennzeichnet, dass jedem der Streckwerke je ein eigener Antriebselektromotor zugeordnet ist und dass Einrichtungen vorgesehen sind zum Messen der Drehzahl des Wickelaggregat-Antriebsmotors und zum Synchronisieren der Streckwerks-Antriebsmotoren mit der gemessenen Drehzahl.

In bevorzugten Ausführungsformen der Erfindung sind die Streckwerks-Antriebsmotoren Synchronmotoren, die von wenigstens einem Wechselrichter gespeist sind. Zum Synchronisieren dieser Streckwerks-Antriebsmotoren mit dem Wickelaggregat-Antriebsmotor genügt es dann, auf der Welle des Wickelaggregat-Antriebsmotors (oder einer damit direkt gekuppelten Welle) einen Drehzahlgeber anzuordnen, der ein Signal abgibt, welches, vorzugsweise nach einer vorbestimmten Frequenzmultiplikation, den Wechselrichter steuert.

In der erfindungsgemässen Maschine ist es problemlos möglich, zusätzlich ein oder mehrere Vliesstreckwerke zum weiteren Verziehen der verzogenen Faserbänder anzuordnen. Die Antriebsmotoren der die Faserbänder verziehenden Streckwerke und der Antriebsmotor bzw. die Antriebsmotoren des bzw. der Vliesstreckwerke sind dann vorzugsweise Synchronmotoren, die von zwei Wechselrichtern gespeist werden, welche mit geringfügig unterschiedlichen Frequenzen angesteuert werden. Damit kann ein geringfügiger Anspannverzug (z.B. etwa 0,1 %) erhalten werden. Die beiden unterschiedlichen Frequenzen können wiederum vom Signal eines auf der Welle des Wickelaggregat-Antriebsmotors angeordneten Drehzahlgebers abgeleitet werden.

Ebenso kann für den Antrieb eines Abzugsorgans, welches die zu verziehenden Faserbänder aus Kannen abzieht, ein eigener Antriebselektromotor angeordnet werden, vorzugsweise ein Synchronmotor, der von einem Wechselrichter gespeist wird. Dieser Wechselrichter kann der gleiche Wechselrichter sein, der auch die Antriebsmotoren der Streckwerke zum Verziehen der Faserbänder speist, oder auch ein separater Wechselrichter, der dann mit einem von der Drehzahl einer Eingangswalze eines der Streckwerke abhängigen Signal gesteuert werden kann.

Ausführungsbeispiele der Erfindung werden nachstehend anhand der Zeichnungen näher erläutert. In diesen zeigen:
Fig. 1 einen schematischen Vertikalschnitt durch Teile einer Maschine zum Herstellen von Wattewickeln,
Fig. 2 eine Draufsicht zu Fig. 1,
Fig. 3 in einer ähnlichen Ansicht wie Fig. 1 in etwas kleinerem Massstab eine erweiterte Maschine,
Fig. 4 ein elektrisches Blockschema der Speisung der Antriebsmotoren und
Fig. 5 ein elektrisches Blockschema einer abgewandelten Speisung.

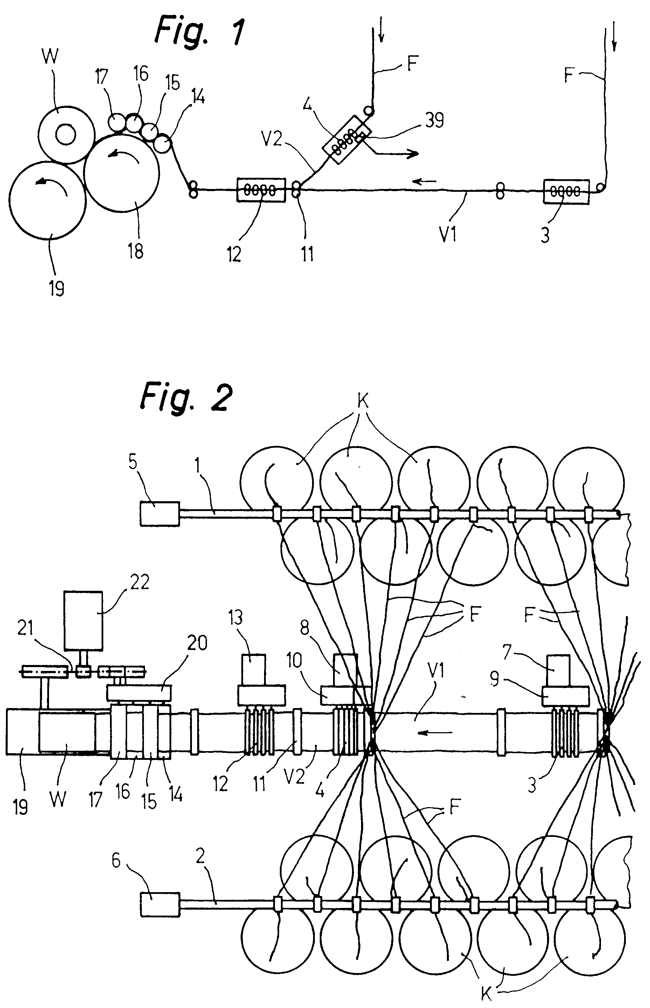

Auf beiden Seiten der in Fig. 1 und 2 schematisch dargestellten Maschine werden auf dem Fussboden Reihen von Kannen K aufgestellt, welche Faserbänder, in der Regel Streckenbänder, enthalten. Ueber jeder Kannenreihe ist jeweils ein Umlenkorgan 1 bzw. 2 für die aus den Kannen K abzuziehenden Faserbänder F angeordnet. Ueber die Umlenkorgane 1 und 2 laufen die Faserbänder F zu Vertikalführungen, welche die Faserbänder von oben zu zwei Streckwerken 3 und 4 führen. Die Umlenkorgane 1 und 2 sind vorzugsweise, aber nicht notwendigerweise, Abzugswellen, die je von einem eigenen Antriebselektromotor 5 bzw. 6 angetrieben werden, um die Faserbänder F aus den Kannen K abzuziehen.

Jedes der beiden Streckwerke 3 und 4 besitzt jeweils einen eigenen Antriebselektromotor 7 bzw. 8 sowie ein Getriebe 9 bzw. 10, welches die einzelnen Walzen des Streckwerks miteinander kuppelt. Das Streckwerk 3 verzieht die zugeführten Faserbänder F und bildet daraus ein Vlies V1. Aehnlich gibt das Streckwerk 4 ein Vlies V2 ab. Die beiden Vliese V1 und V2 werden in einem Walzenpaar 11 aufeinandergelegt. Die aufeinandergelegten Vliese durchlaufen dann vorzugsweise ein zusätzliches Vliesstreckwerk 12, das einen eigenen Antriebselektromotor 13 besitzt. Das Vliesstreckwerk 12 und der Antriebsmotor 13 könnten aber auch weggelassen sein. Anschliessend laufen die aufeinandergelegten Vliese in einen Walzenkalander mit Kalanderwalzen 14, 15, 16, 17 und von diesem zu einem Wattewickel W, der auf zwei Wickelwalzen 18 und 19 getragen ist und von diesen gedreht wird. Die Wickelwalzen 18 und 19 und ein Getriebe 20 der Kalanderwalzen 14, 15, 16, 17 werden, z.B. über eine Kette 21, von einem Antriebselektromotor 22 angetrieben.

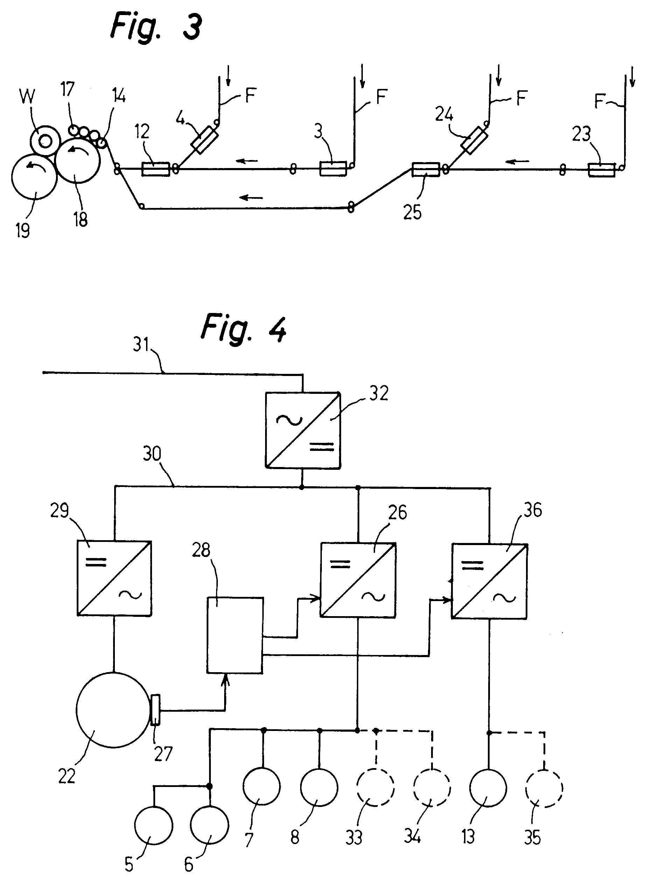

Die in Fig. 3 schematisch dargestellte Maschine enthält im wesentlichen die gleichen Teile wie die vorstehend anhand der Fig. 1 und 2 beschriebene, insbesondere die beiden Streckwerke 3 und 4, das zusätzliche Vliesstreckwerk 12 (das auch weggelassen werden könnte), die Kalanderwalzen 14-17 und die Wickelwalzen 18 und 19. Zusätzlich enthält die Maschine noch zwei weitere Streckwerke 23 und 24, denen ebenfalls Faserbänder F zugeführt werden. Die von den Streckwerken 23 und 24 abgegebenen Vliese werden wiederum aufeinandergelegt und können dann zusammen ein zusätzliches Vliesstreckwerk 25 durchlaufen. Die Vliese von allen vier Streckwerken 3, 4, 23 und 24 werden dann zusammen dem Walzenkalander 14-17 zugeführt und anschliessend auf dem Wattewickel W aufgewickelt.

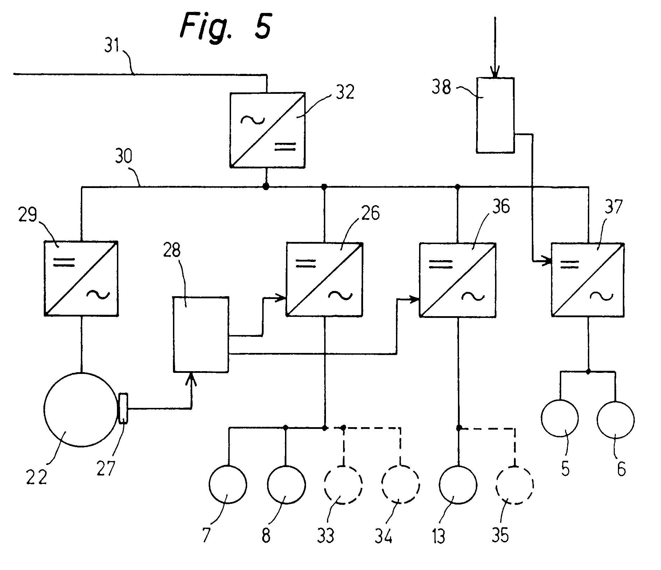

In Maschinen zur Herstellung von Wattewickeln von der Art der vorstehend beschriebenen muss das Verhältnis zwischen der Antriebsdrehzahl jedes der Streckwerke, denen die Faserbänder zugeführt werden, und der Antriebsdrehzahl des Wickelaggregates, d.h. im vorliegenden Fall der Kalanderwalzen 14-17 und der Wickelwalzen 18 und 19, stets konstant sein, damit Ungleichmässigkeiten in den dem Wickelaggregat zulaufenden Vliesen vermieden werden. Um das zu gewährleisten, enthält die erfindungsgemässe Maschine Einrichtungen zum Messen der Drehzahl des Wickelaggregat-Antriebsmotors 22 und zum Synchronisieren der Streckwerks-Antriebsmotoren 7 und 8 mit der gemessenen Drehzahl. In den bevorzugten Ausführungsformen werden als Streckwerks-Antriebsmotoren 7 und 8 Synchronmotoren, insbesondere Reluktanzmotoren, verwendet, die wie in Fig. 4 oder 5 gezeigt von einem Wechselrichter 26 gespeist werden. Die Drehzahl des Wickelaggregat-Antriebsmotors 22 wird von einem Drehzahlgeber 27 gemessen, der am Antriebsmotor 22 oder an einem mit diesem direkt gekuppelten Element angeordnet ist. Der Drehzahlgeber 27 gibt ein Signal an eine Steuereinheit 28 ab, die einen Frequenzmultiplizierer enthält und ihrerseits ein Signal abgibt, welches den Wechselrichter 26 so steuert, dass die Frequenz der vom Wechselrichter 26 abgegebenen Speisespannung für die Motoren 7 und 8 stets proportional ist zur Drehzahl des Wickelaggregat-Antriebsmotors 22.

Der Wickelaggregat-Antriebsmotor 22 kann ein kostengünstiger Asynchronmotor sein, der von einem Wechselrichter 29 gespeist wird. Die Wechselrichter 26 und 29 sind an ein gemeinsames Gleichstromnetz 30 angeschlossen, das aus dem Wechselstromnetz 31 über einen Gleichrichter 32 gespeist wird.

In der Ausführungsform gemäss Fig. 3 besitzen die beiden weiteren Streckwerke 23 und 24 ebenfalls je einen eigenen Antriebsmotor. Diese Antriebsmotoren, die in Fig. 4 mit 33 und 34 bezeichnet sind, sind ebenfalls vom Wechselrichter 26 gespeiste Synchronmotoren, vorzugsweise Reluktanzmotoren.

Der Antriebsmotor 13 des zusätzlichen Vliesstreckwerks 12, falls vorhanden, und gegebenenfalls ein Antriebsmotor 35 des zweiten Vliesstreckwerks 25 (Fig. 3) sind vorzugsweise ebenfalls Reluktanzmotoren und sind an einen eigenen, ebenfalls aus dem Gleichstromnetz 30 gespeisten Wechselrichter 36 angeschlossen, der von der Steuereinheit 28 mit einer Frequenz gesteuert wird, die höher ist als die Frequenz des Wechselrichters 26. Die Verhältnisse können zweckmässig so sein, dass die Umfangsgeschwindigkeit der Eingangswalzen der Vliesstreckwerke 12 und 25 um etwa 0,1 % höher ist als die Umfangsgeschwindigkeit der Ausgangswalzen der Streckwerke 3, 4, 23 und 24 und dass die Umfangsgeschwindigkeit der Kalanderwalzen 14-17 und der Wickelwalzen um etwa 0,1 % höher ist als die Umfangsgeschwindigkeit der Ausgangswalzen der Vliesstreckwerke 12 und 25. So wird sowohl zwischen den Streckwerken 3, 4, 23 und 24 und den Vliesstreckwerken 12 und 25 als auch zwischen den letzteren und den Kalanderwalzen 14-17 jeweils ein kleiner Anspannverzug erzielt.

Wie im Vorstehenden erläutert, sind die Umlenkorgane 1 und 2, über welche die Faserbänder F aus den Kannen K abgezogen werden, vorzugsweise angetriebene Abzugswellen mit eigenen Antriebsmotoren 5 und 6. Diese Motoren 5 und 6 sind wiederum vorzugsweise Reluktanzmotoren. Für die Speisung dieser Reluktanzmotoren sind in den Fig. 4 bzw. 5 zwei unterschiedliche Möglichkeiten dargestellt.

Gemäss Fig. 4 sind die Motoren 5 und 6 von dem gleichen Wechselrichter 26 gespeist, der auch die Antriebsmotoren 7 und 8 (und gegebenenfalls 33 und 34) der Streckwerke 3 und 4 (und gegebenenfalls 23 und 24) speist. Das Verhältnis der Drehzahl der Motoren 5 und 6 zur Drehzahl der Streckwerks-Antriebsmotoren 7, 8, 33, 34 ist hier also konstant. Damit auch das Verhältnis der Drehzahl der Abzugswellen 1 und 2 zur Drehzahl der Eingangswalzen der Streckwerke 3, 4, 23, 24 konstant ist, dürfen die Uebersetzungsverhältnisse in den Getrieben 9, 10 der Streckwerke nicht geändert werden, wenn die Streckwerks-Antriebsmotoren in den Streckwerken jeweils die Ausgangswalze antreiben. Das letztere ist erwünscht, weil so die Umfangsgeschwindigkeit der Ausgangswalzen der Streckwerke 3, 4, 23, 24 zur Umfangsgschwindigkeit nachfolgender Elemente (zusätzliche Vliesstreckwerke 12, 25 und/oder Kalanderwalzen 14-17) stets in dem Verhältnis steht, das die Steuereinheit 28 dem Wechselrichter 26 vorgibt. Wenn dagegen die Streckwerks-Antriebsmtoren in den Streckwerken 3, 4, 23, 24 jeweils die Eingangswalze antreiben, dann könnten die Uebersetzungsverhältnisse in den Getrieben 9, 10 der Streckwerke unter der Voraussetzung geändert werden (zur Anpassung an unterschiedliche Fasermaterialien), dass gleichzeitig auch die Steuereinheit 28 verstellbar ist und verstellt wird, um den Wechselrichter 26 mit einer entsprechend anderen Frequenz anzusteuern.

In Fig. 5 ist eine andere Möglichkeit für die Speisung der Antriebsmotoren 5 und 6 der Abzugswellen 1 und 2 schematisch dargestellt. Gemäss Fig. 5 werden die Motoren 5 und 6 von einem eigenen Wechselrichter 37 gespeist, der ebenfalls an das gemeinsame Gleichstromnetz 30 angeschlossen ist. Eine zweite Steuereinheit 38 erhält ein Signal von einem Drehzahlgeber 39 (in Fig. 1 rein schematisch angedeutet), der an der Eingangswalze eines der Streckwerke 3, 4 (und gegebenenfalls 23, 24) angebracht ist. Die Steuereinheit 38 steuert den Wechselrichter 37 so, dass die Umfangsgeschwindigkeit der Abzugswellen 1 und 2 stets im gewünschten vorbestimmten Verhältnis zur gemessenen Drehzahl bzw. zur Umfangsgeschwindigkeit der Eingangswalzen der Streckwerke 3, 4, 23, 24 steht. Dieses Verhältnis ändert sich auch nicht, wenn bei angetriebenen Ausgangswalzen der Streckwerke die Uebersetzungsverhältnisse in den Getrieben 9, 10 der Streckwerke geändert werden.

## Patentansprüche

1. Maschine zum Herstellen von Wattewickeln aus Faserbändern, mit einem Wickelaggregat (14, 15, 16, 17, 18, 19), das mit einem Antriebselektromotor (22) gekuppelt ist, und mit Streckwerken (3, 4, 23, 24) zum Verziehen der Faserbänder (F), dadurch gekennzeichnet, dass jedem der Streckwerke (3, 4, 23, 24) je ein eigener Antriebselektromotor (7, 8, 33, 34) zugeordnet ist und dass Einrichtungen (27, 28, 26) vorgesehen sind zum Messen der Drehzahl des Wickelaggregat-Antriebsmotors (22) und zum Synchronisieren der Streckwerks-Antriebsmotoren (7, 8, 33, 34) mit der gemessenen Drehzahl.

2. Maschine nach Anspruch 1, dadurch gekennzeichnet, dass sie zusätzlich ein oder mehrere Vliesstreckwerke (12, 25) zum weiteren Verziehen der verzogenen Faserbänder enthält und dass dem Vliesstreckwerk bzw. jedem der Vliesstreckwerke (12, 25) je ein eigener Antriebselektromotor (13, 35) zugeordnet ist, der ebenfalls von den genannten Einrichtungen (27, 28, 26, 36) mit der gemessenen Drehzahl des Wickelaggregat-Antriebsmotors (22) synchronisiert ist.

3. Maschine nach Anspruch 1 oder 2, dadurch gekennzeichnet, dass die Streckwerks-Antriebsmotoren (7, 8, 33, 34, 13, 35) Synchronmotoren sind, die von wenigstens einem Wechselrichter (26, 36) gespeist sind, der mit einem von der Drehzahl des Wickelaggregat-Antriebsmotors (22) abhängigen Signal gesteuert ist.

4. Maschine nach Anspruch 3, dadurch gekennzeichnet, dass die Synchronmotoren (7, 8, 33, 34, 13, 35) Reluktanzmotoren sind.

5. Maschine nach den Ansprüchen 2 und 3, dadurch gekennzeichnet, dass zwei getrennte Wechselrichter (26, 36) vorhanden sind, von denen einer (26) die Antriebsmotoren (7, 8, 33, 34) der Streckwerke (3, 4, 23, 24) zum Verziehen der Faserbänder (F) speist, während der andere Wechselrichter (36) den Antriebsmotor bzw. die Antriebsmotoren (13, 35) des bzw. der Vliesstreckwerke (12, 25) speist.

6. Maschine nach einem der Ansprüche 1 bis 5, dadurch gekennzeichnet, dass sie wenigstens ein Abzugsorgan (1, 2) zum Abziehen der Faserbänder (F) aus Kannen (K) und einen eigenen Antriebselektromotor (5, 6) für das Abzugsorgan enthält.

7. Maschine nach Anspruch 6, dadurch gekennzeichnet, dass der Antriebsmotor (5, 6) des Abzugsorgans (1, 2) ein Synchronmotor ist, der von einem Wechselrichter (36; 37) gespeist ist.

8. Maschine nach Anspruch 7, dadurch gekennzeichnet, dass der Antriebsmotor (5, 6) des Abzugsorgans (1, 2) ein Reluktanzmotor ist.

9. Maschine nach Anspruch 7 oder 8, dadurch gekennzeichnet, dass der Wechselrichter (37), der den Antriebsmotor (5, 6) des Abzugsorgans (1, 2) speist, mit einem von der Drehzahl einer Eingangswalze eines der Streckwerke (4) zum Verziehen der Faserbänder (F) abhängigen Signal gesteuert ist.

10. Maschine nach den Ansprüchen 3 und 7, dadurch gekennzeichnet, dass der Antriebsmotor (5, 6) des Abzugsorgans (1, 2) von dem gleichen Wechselrichter (26) gespeist ist, der auch die Antriebsmotoren (7, 8, 33, 34) der Streckwerke (3, 4, 23, 24) zum Verziehen der Faserbänder (F) speist.

11. Maschine nach einem der Ansprüche 1 bis 10, dadurch gekennzeichnet, dass der Wickelaggregat-Antriebsmotor (22) ein Asynchronmotor ist, der von einem Wechselrichter (29) gespeist ist.

12. Maschine nach einem der Ansprüche 3 bis 11, mit mehr als einem Wechselrichter (29, 26, 36, 37), dadurch gekennzeichnet, dass alle Wechselrichter (29, 26, 36, 37) aus einem gemeinsamen Gleichstromnetz (30) gespeist sind.
